# EUROPÄISCHE PATENTSCHRIFT

(11) **EP 4 355 257 B1**
(45) Veröffentlichungstag und Bekanntmachung des Hinweises auf die Patenterteilung: **16.04.2025**
(21) Anmeldenummer: 23764230.1
(22) Anmeldetag: 15.08.2023
(51) Int. Cl.: A61C 7/08, A61C 9/00, B33Y 80/00

(54) **EINRICHTUNG ZUM HERSTELLEN EINES FORMTEILS EINER ZAHNSCHIENE**
DEVICE FOR PRODUCING A MOULDED PART OF A DENTAL SPLINT
DISPOSITIF DE FABRICATION D'UNE PIÈCE MOULÉE D'UNE ATTELLE DENTAIRE

(30) Priorität: 06.09.2022 DE 102022209272
(43) Veröffentlichungstag der Anmeldung: 24.04.2024
(73) Patentinhaber: Glanzify Haftungsbeschränkt, 69115 Heidelberg (DE)
(72) Erfinder: SHRISHRIMAL, Akshay, 69115 Heidelberg (DE)
(74) Vertreter: Ullrich & Naumann PartG mbB
(86) Internationale Anmeldenummer: PCT/DE2023/200165
(87) Internationale Veröffentlichungsnummer: WO 2024/051899

(56) Entgegenhaltungen:
- DE-A1- 102013 103 501
- DE-A1- 102013 103 501
- DE-A1- 19 948 958
- DE-A1- 19 948 958
- US-A1- 2008 206 702
- US-A1- 2009 068 612
- US-A1- 2009 068 612

## Beschreibung

Die Erfindung betrifft eine Einrichtung zum Herstellen eines Formteils zum Thermoformen einer Zahnschiene.

Die Erfindung betrifft weiter eine Vorrichtung zum Herstellen einer Zahnschiene.

Darüber hinaus betrifft die Erfindung ein Verfahren zum Herstellen einer Zahnschiene.

Zur Behandlung von Fehlstellungen von Zähnen ist es bekannt, an den Zähnen eine feste Zahnspange anzubringen. Durch die Zahnspange wird Zug auf die Zähne ausgeübt, durch den die Zähne in eine gewünschte Form gezogen werden. Aufgrund des unschönen Einflusses auf das Erscheinungsbild des Gebisses und der insbesondere bei Erwachsenen auftretenden starken Schmerzen werden feste Zahnspangen primär bei Kindern und Jugendlichen eingesetzt.

Es ist ebenfalls bekannt durchsichtige Zahnschienen - sogenannte Aligner - zur Korrektur der Fehlstellungen zu nutzen. Hierfür wird zunächst ein Abdruck des Gebisses gefertigt und digital eingescannt. Ausgehend von diesem Ist-Zustand wird ein Ziel-Zustand definiert und ein Behandlungsweg mit mehreren Phasen ermittelt. Für jede Phase wird für Ober- und Unterkiefer eine individuelle Zahnschiene hergestellt, die für circa zwei Wochen getragen wird. Durch die Zahnschiene wird Druck auf die Zähne ausgeübt, sodass sich diese in die gewünschte Position bewegen.

Zur Herstellung der Zahnschienen wird zunächst für jede Behandlungsphase ein digitales 3D-Modell des Gebisses erzeugt und mittels eines 3D-Druckers gedruckt. Die gedruckten 3D-Modelle dienen anschließend als Formteil, die mit einem durchsichtigen Kunststoff mittels eines Thermoformprozesses umhüllt werden, sodass eine Zahnschiene entsteht. Zuletzt werden die entstandenen Zahnschienen nachbearbeitet, beispielsweise durch Polieren, Schneiden und Reinigen. Auf diese Weise werden die einzelnen Zahnschienen für jedes 3D-Druck-Modell hergestellt.

Der Nachteil an diesem Verfahren ist, dass für jede Zahnschiene ein eigenes 3D-Modell mittels des 3D-Druckers gedruckt werden muss. Eine Behandlung dauert durchschnittlich 14 Monate, sodass für Ober- und Unterkiefer insgesamt 56 Zahnschienen hergestellt und folglich 56 3D-Druck-Modelle gedruckt werden müssen. Dieser Vorgang ist zeit- und ressourcenintensiv. Bei einer erwarteten Druckzeit von circa 25 Minuten und einem Materialaufwand von circa 11.5 cm³ pro 3D-Druck-Modell dauert der Prozess bis zu 24 Stunden und es werden 667 cm³ Material benötigt. Zusätzlich ist der Vorgang umständlich, da ein Arbeiter alle halbe Stunde die Zahnschiene entfernen und den Vorgang erneut starten muss. In US 2009/068612 A1 ist eine Vorrichtung und ein Verfahren zur Herstellung von Zahnschienen offenbart. US 2008/206702 A1 offenbart ein manipulierbares oder rekonfigurierbares Dentalmodellsystem und ein Verfahren zum Thermoformen von Zahnschienen unter Verwendung eines Roboters.

Der vorliegenden Erfindung liegt daher die Aufgabe zugrunde, eine Vorrichtung und ein Verfahren anzugeben, so dass der Zeit- und Ressourcenaufwand zur Herstellung der Zahnschienen verringert wird.

Erfindungsgemäß wird die voranstehende Aufgabe durch die Merkmale des Anspruches 1 gelöst. Danach ist eine Einrichtung zum Herstellen eines Formteils zum Thermoformen einer Zahnschiene umfassend ein Grundelement, eine Halteplatte und zumindest ein Aufnahmeelement, vorzugsweise mehrere Aufnahmeelemente, beansprucht, wobei das zumindest eine Aufnahmeelement an einer Oberseite der Halteplatte lösbar angeordnet ist, wobei das zumindest eine Aufnahmeelement dazu ausgebildet ist, eine Zahnschablone aufzunehmen, wobei das zumindest eine Aufnahmeelement in mehreren Positionen und/oder Ausrichtungen an der Halteplatte festlegbar ist.

Weiter wird die voranstehende Aufgabe erfindungsgemäß durch die Merkmale des Anspruchs 5 gelöst, wonach eine Vorrichtung zum Herstellen einer Zahnschiene umfassend eine Einrichtung gemäß einem der Ansprüche 1 bis 4, eine Positioniereinrichtung zum Positionieren des zumindest einen Aufnahmeelements und eine Thermoformeinrichtung zum Thermoformen eines Kunststoffrohlings gegeben ist.

Außerdem wird die voranstehende Aufgabe durch die Merkmale des Anspruchs 10 gelöst, wonach ein Verfahren zum Herstellen einer Zahnschiene gezeigt ist, mittels einer Vorrichtung nach einem der Ansprüche 5 bis 9, umfassend die Schritte:
- Erhalten eines Plans für eine Positionierung und/oder Anordnung von Aufnahmeelementen, wobei an den Aufnahmeelementen jeweils eine Zahnschablone angeordnet ist,
- Platzieren und Festlegen der Aufnahmeelemente auf einer Oberseite einer Halteplatte anhand des erhaltenen Plans, wobei ein Roboterarm einer Positioniereinrichtung die Aufnahmeelemente greift und auf der Halteplatte platziert,
- Herstellen der Zahnschiene durch Thermoformen eines Kunststoffrohlings, wobei die platzierten Aufnahmeelemente als Formteil für das Thermoformen genutzt werden.

In erfindungsgemäßer Weise ist erkannt worden, dass durch ein in mehreren Positionen und/oder Ausrichtungen festlegbares Aufnahmeelement bzw. mehrere Aufnahmeelemente mit einer Zahnschablone das Formteil für die Zahnschiene nach dem Thermoformen verändert werden kann. Somit können Aufnahmeelemente in einer ersten Konfiguration angeordnet werden und eine erste Zahnschiene hergestellt werden. Anschließend können die Aufnahmeelemente in Position und/oder Ausrichtung verändert werden, sodass ein neues Formteil entsteht, das für die Herstellung einer zweiten Zahnschiene genutzt werden kann. Auf diese Weise können sämtliche Zahnschienen mittels derselben Zahnschablone hergestellt werden.

Im Rahmen der Ansprüche und der Beschreibung ist eine Zahnschiene insbesondere als ein kieferorthopädisches Objekt zu verstehen, das an dem Gebiss eines Nutzers angeordnet werden kann, um insbesondere die Position und/oder Ausrichtung der Zähne zu verändern. Es ist ebenfalls denkbar, dass die Zahnschiene als eine Aufbissschiene, Zahnspange oder Reservoir für ein Bleichmittel etc. ausgebildet ist.

Unter der "Position und/oder Ausrichtung" des Aufnahmeelements ist insbesondere die Anordnung der Aufnahmeelemente in Relation zu der Halteplatte und/oder zueinander zu verstehen. Insbesondere umfasst dies auch eine Torsion, Neigung, Drehung und/oder Abwinklung der Aufnahmeelemente in Relation zu der Halteplatte und/oder zueinander.

Der Begriff "Zahnschablone" beschreibt eine künstliche Nachbildung eines Zahns. Insbesondere ist die Zahnschablone dazu ausgebildet, als Passform für die Herstellung einer, einen Zahn umhüllenden, Zahnschiene zu dienen. Beispielsweise kann eine Zahnschablone hergestellt werden, indem ein Zahn eines Gebisses gescannt wird und mittels eines 3D-Druckers gedruckt wird.

Der Begriff "Halteplatte" ist im Rahmen dieser Offenbarung im weitesten Sinne zu verstehen. Eine Halteplatte umfasst allgemein einen Haltebereich, an dem Aufnahmeelemente angeordnet werden können. Insbesondere kann die Halteplatte plattenförmig ausgebildet sein. Es ist ebenfalls denkbar, dass die Halteplatte andere Formen aufweist. Die Halteplatte kann einteilig mit dem Grundkörper ausgebildet sein, an dem Grundkörper angeordnet sein und/oder indirekt, d.h. über ein weiteres Element, mit dem Grundkörper verbunden sein.

Die Oberseite der Halteplatte ist insbesondere definiert als diejenige Seite der Halteplatte, die den Aufnahmeelementen im festgelegten Zustand zugewandt ist. Die Unterseite der Halteplatte ist analog diejenige Seite, die von der Oberseite der Halteplatte abgewandt ist.

Das zumindest eine Aufnahmeelement bzw. die mehreren Aufnahmeelemente kann/können auf beliebige Weise lösbar an der Halteplatte angeordnet und/oder festgelegt sein, beispielsweise durch eine kraft- und/oder formschlüssige Verbindung. Eine lösbare Anordnung bezeichnet dabei insbesondere eine derartige Anordnung, dass das Aufnahmeelement von der Halteplatte entfernbar ist und/oder in Relation zu der Halteplatte und/oder anderen Aufnahmeelementen bewegbar ist. Insbesondere kann das Aufnahmeelement auf der Halteplatte verschoben und/oder entlang einer Achse rotiert werden.

Die Aufnahmeelemente können in verschiedenen Positionen und/oder Ausrichtungen an der Halteplatte angeordnet sein. Insbesondere gibt es einen Bereich auf der Halteplatte, in dem die Aufnahmeelemente frei anordenbar sind.

Beispielsweise können die Aufnahmeelemente auf der Halteplatte verschoben werden.

Gemäß der Erfindung ist an einer Unterseite der Halteplatte ein Magnet, insbesondere ein Elektromagnet, angeordnet und das zumindest eine Aufnahmeelement besteht zumindest teilweise aus einem magnetisierbaren Material. Ein Vorteil hiervon ist, dass auf einfache Weise eine lösbare Anordnung der Aufnahmeelemente in verschiedenen Positionen und/oder Ausrichtungen auf der Halteplatte realisiert werden kann. Durch den Magneten werden die Aufnahmeelemente angezogen und somit festgelegt. Der Magnet kann insbesondere in dem Grundelement angeordnet sein. Eine Magnetfeldstärke des Magneten kann bei Verwendung eines Elektromagneten auf einfache Weise durch die angelegte Stromstärke eingestellt werden. Hierdurch kann der Magnet in einer ersten Konfiguration betrieben werden, in der die Magnetfeldstärke gering ist, so dass die Aufnahmeelemente einfach positioniert werden können. Der Magnet kann zudem in einer zweiten Konfiguration betrieben werden, in der die Magnetfeldstärke hoch ist, so dass die Aufnahmeelemente fixiert sind. Es ist ebenfalls denkbar, dass ein Permanentmagnet angeordnet ist, dessen Einfluss auf die Aufnahmeelemente durch ein Verändern des Abstands von der Halteplatte einstellbar ist.

In vorteilhafter Weise ist an dem Grundelement ein Tragering angeordnet. Der Tragering kann beispielsweise form- und/oder kraftschlüssig an dem Grundelement angeordnet sein. Ein Vorteil hiervon ist, dass auf einfache Weise ein Kunststoffrohling, beispielsweise eine Kunststoffplatte angeordnet werden kann, die das zur Herstellung der Zahnschiene notwendige Material bereitstellt.

Der Tragering kann in einer ersten Position, in der der Tragering an der Halteplatte angeordnet ist und in einer zweiten Position, in der der Tragering von der Halteplatte beabstandet ist, anordenbar sein. Der Tragering kann beispielsweise durch einen Federmechanismus und/oder eine hydraulische und/oder pneumatische Anordnung bewegbar sein. Durch Druck auf den Tragering wird die Federkraft überwunden und/oder der Druck in der Hydraulik/Pneumatik wird reduziert und der Tragering liegt an der Halteplatte an. In dieser Position können die Aufnahmeelemente auf der Halteplatte positioniert werden, ohne dass der Tragering die Positionierung stört. Wenn der Druck nicht anliegt, drücken die Federn den Tragering von der Halteplatte weg und/oder der Druck in Hydraulik/Pneumatik wird erhöht, sodass der Abstand des Tragerings zur Halteplatte größer ist als die Länge der Aufnahmeelemente. Somit kann der Kunststoffrohling auf dem Tragering angeordnet werden und der Kunststoffrohling befindet sich dann über den Aufnahmeelementen.

Gemäß einer vorteilhaften Ausgestaltung der Erfindung weist das zumindest eine Aufnahmeelement eine kreisförmige Grundfläche und/oder eine eckige, insbesondere rechteckige, Querschnittsfläche auf. Die Grundfläche des Aufnahmeelements ist insbesondere definiert als diejenige Fläche des Aufnahmeelements, die im festgelegten Zustand des Aufnahmeelements an der Halteplatte anliegt. Indem die Grundfläche kreisförmig ist, kann das Aufnahmeelement leicht auf der Halteplatte verschoben und so positioniert werden. Die Querschnittsfläche des Aufnahmeelements ist insbesondere definiert als eine Fläche durch das Aufnahmeelement und parallel zur Grundfläche. Die Querschnittsfläche kann rechteckig sein, sodass das Aufnahmeelement von einem Greifroboter sicher gegriffen und/oder gehalten werden kann. Es ist weiterhin denkbar, dass in den Aufnahmeelementen jeweils eine Einbuchtung und/oder ein Durchbruch vorgesehen ist. Mittels der Einbuchtung und/oder des Durchbruchs kann das Aufnahmeelement auf besonders einfache Weise von einem Roboterarm aufgenommen werden. Insbesondere kann ein Roboterarm in die Einbuchtung und/oder den Durchbruch eingreifen.

Es ist ebenfalls möglich, dass an dem zumindest einen Aufnahmeelement ein Zahnaufnahmeelement form- und/oder kraftschlüssig angeordnet ist, wobei das Zahnaufnahmeelement vorzugsweise einen rechteckigen, hexagonalen und/oder kreuzförmigen Querschnitt aufweisen kann. Durch das Zahnaufnahmeelement kann eine Verbindung zwischen dem Aufnahmeelement und der Zahnschablone hergestellt werden. Insbesondere kann das Zahnaufnahmeelement in das Aufnahmeelement gesteckt sein, beispielsweise durch einen Schnappverschluss. Die Zahnschablone kann eine Aufnahme aufweisen, die zu dem rechteckigen, hexagonalen und/oder kreuzförmigen Querschnitt des Zahnaufnahmeelements korrespondiert, sodass die Zahnschablone auf das Zahnaufnahmeelement gesteckt werden kann. Es ist ebenfalls möglich, dass die Zahnschablone ein Verbindungselement aufweist, das mit dem Zahnaufnahmeelement verbunden werden kann. Ein Vorteil hiervon ist, dass die Zahnschablone auf einfache Weise an dem Aufnahmeelement angeordnet werden kann. Es ist ebenfalls denkbar, dass durch das Zahnaufnahmeelement ein Winkel zwischen der Zahnschablone und dem Aufnahmeelement eingestellt werden kann. Beispielsweise könnte das Zahnaufnahmeelement mit einem Winkel ausgebildet sein. Hierdurch kann auch eine Neigung eines Zahns durch die Zahnschablone berücksichtigt werden.

Gemäß einer vorteilhaften Ausgestaltung der Erfindung sind zumindest 6, vorzugsweise zumindest 8, bevorzugt zumindest 10, insbesondere zumindest 12 Aufnahmeelemente angeordnet. Hierdurch können beliebige Gebisse mittels der Aufnahmeelemente nachgebildet werden. Beispielsweise kann ein Ober- oder Unterkiefer eines Kindes mit 10 Zähnen nachgebildet werden, ein Ober- oder Unterkiefer eines Erwachsenen mit 16 Zähnen und/oder ein Ober- oder Unterkiefer eines Erwachsenen ohne Weisheitszähne mit 14 Zähnen. An jedem der Aufnahmeelemente kann ein separates Zahnaufnahmeelement angeordnet sein, wobei an jedem Zahnaufnahmeelement eine Zahnschablone anordenbar ist. Insbesondere können mehrere und/oder alle Aufnahmeelemente unabhängig voneinander in Position und/oder Ausrichtung relativ zum Grundelement und/oder relativ zueinander geändert werden. Dabei ist es möglich, dass die Position und/oder Ausrichtung diskret, also in vorbestimmten Positionen und/oder Ausrichtungen einstellbar ist, oder kontinuierlich, also in beliebigen Positionen und/oder Ausrichtungen innerhalb eines Bereichs.

An der Vorrichtung zum Herstellen einer Zahnschiene kann eine Schneideinrichtung zum Schneiden der Zahnschiene angeordnet sein. Nach dem Thermoformen des Kunststoffrohlings zum Herstellen der Zahnschiene können an der Zahnschiene Reste des Kunststoffrohlings hängen. Diese können durch eine Schneideinrichtung entfernt werden, sodass die Zahnschiene entnommen werden kann. Hierfür kann eine Schneid-Trajektorie auf dem thermogeformten Kunststoffrohling berechnet werden, entlang der die Schneideinrichtung schneidet. Die Schneideinrichtung kann beispielsweise automatisiert durch einen Roboter betrieben werden. Ein Vorteil hiervon ist, dass die Zahnschiene direkt nach dem Thermoformen automatisiert von den Resten des Kunststoffrohlings getrennt werden kann.

Darüber hinaus kann an der Vorrichtung eine Bewegungseinrichtung angeordnet sein, ausgebildet zum Bewegen der Thermoformeinrichtung zu der Einrichtung. Mittels der Einrichtung wird das Formteil für die Herstellung der Zahnschiene bereitgestellt. Darüber hinaus kann die Einrichtung als Basisstation für weitere Arbeitsschritte dienen, beispielsweise dem Thermoformen oder dem Schneiden. Um zu verhindern, dass sich die Thermoformeinrichtung und die Schneideinrichtung gegenseitig behindern, kann die Thermoformeinrichtung durch eine Bewegungseinrichtung zu der Einrichtung hin- und von der Einrichtung wegbewegt werden. Die Bewegungseinrichtung kann beispielsweise eine lineare Bewegung der Thermoformeinrichtung ermöglichen. Auf diese Weise können mehrere Arbeitsschritte an der Einrichtung durchgeführt werden, ohne dass sich verschiedene Einrichtungen für weitere Arbeitsschritte gegenseitig behindern.

Zur Unterstützung der Positionier- und/oder Schneideinrichtung ist es möglich, dass eine Bilderfassungseinrichtung angeordnet ist, ausgebildet zum Erfassen der Position und/oder der Ausrichtung des zumindest einen Aufnahmeelements und/oder der Zahnschiene. Die Bilderfassungseinrichtung kann beispielsweise eine Kamera sein. Durch die Bilderfassungseinrichtung kann die Position und/oder Ausrichtung des Aufnahmeelements erfasst werden, sodass die Positionierungseinrichtung das Aufnahmeelement genauer positionieren und/oder ausrichten kann. Es ist ebenfalls denkbar, dass die Bilderfassungseinrichtung die Position der Zahnschiene nach dem Thermoformen erkennt und somit die Trajektorie für die Bewegung der Schneideinrichtung bestimmen kann. Beispielsweise kann die Bilderfassungseinrichtung ein 2,5-dimensionales Bild bereitstellen.

Es ist denkbar, dass ein Granulatsystem umfassend einen Behälter mit Granulaten und zumindest einer Granulattransporteinrichtung angeordnet ist, wobei die zumindest eine Granulattransporteinrichtung dazu ausgebildet ist, Granulate aus dem Behälter in die Einrichtung und/oder aus der Einrichtung in den Behälter zu transportieren. Der Behälter kann beispielsweise ein Lager für Granulate sein. Die Granulate können einen Durchmesser von 1 bis 3 mm aufweisen. Nachdem die Aufnahmeelemente positioniert sind, können die Granulate mittels der Granulattransporteinrichtung von dem Lager zu der Einrichtung transportiert werden und dort die Aufnahmeelemente umgeben. Insbesondere kann die Einrichtung bis zu den Zahnschablonen der Aufnahmeelemente mit den Granulaten befüllt werden. Hierdurch können die Aufnahmeelemente besser in der Einrichtung festgelegt werden. Außerdem verhindern die Granulate, dass beim Thermoformen der Zahnschiene die Zahnschiene an den Aufnahmeelementen festklebt. Ein weiterer Vorteil der Granulate ist, dass beim Schneiden der Zahnschiene anfallender Schneidabfall von den Granulaten aufgefangen wird. Anschließend können die Granulate aus der Einrichtung mittels der Granulattransporteinrichtung zum Behälter zurücktransportiert werden, sodass die Aufnahmeelemente neu angeordnet werden können. Hierbei kann auch der Schneidabfall durch die Granulate mitabtransportiert werden. Es ist denkbar, dass zwei Granulattransporteinrichtungen vorgesehen sind, von denen die eine den Transport von dem Behälter zu der Einrichtung ermöglicht und die andere den Transport von der Einrichtung zu dem Behälter ermöglicht. Insbesondere kann die Granulattransporteinrichtung einen oder mehrere Kanäle aufweisen, durch die die Granulate transportierbar sind.

Die Granulattransporteinrichtung kann einen Luftdruckerzeuger und eine Düseneinheit aufweisen. Insbesondere wenn mindestens zwei Granulattransporteinrichtungen vorgesehen sind, können zwei oder mehr Granulattransporteinrichtungen von einem Luftdruckerzeuger mit Luft versorgt werden. Der Begriff Luftdruckerzeuger bezeichnet insbesondere eine Einrichtung, die einen Über- und/oder Unterdruck bereitstellen kann, um so Luft durch die Granulattransporteinrichtung zu transportieren. Die Granulate können von dem Luftstrom transportiert werden. Dabei kann der Luftstrom und somit der Granulatstrom durch die Granulattransporteinrichtung beispielsweise mittels Ventilen gesteuert werden. Indem die Granulattransporteinrichtung mittels Luft, insbesondere pneumatisch, betrieben wird, kann auf eine Weise ein Transport der Granulate ermöglicht werden.

Hierfür kann es vorteilhaft sein, dass die Düseneinheit einen Luftkanal, einen Granulatkanal und einen Mischkanal für Luft und Granulat aufweist. Der Luftkanal kann mit dem Luftdruckerzeuger verbunden sein, der Granulatkanal kann mit dem Behälter verbunden sein und der Mischkanal kann mit der Einrichtung verbunden sein. Zum Transportieren der Granulate von dem Behälter in die Einrichtung kann Luft durch den Luftkanal in die Düseneinheit hinein und anschließend durch den Mischkanal aus der Düseneinheit hinaus transportiert werden. Durch den Venturi-Effekt entsteht dabei ein Unterdruck in dem Granulatkanal, sodass Granulate aus dem Behälter in den Mischkanal gezogen werden. Das Gemisch aus Luft und Granulaten kann dann zu der Einrichtung transportiert werden. Zum Entfernen der Granulate kann eine zweite Granulattransporteinrichtung mit einer zweiten Düseneinheit vorgesehen sein. Durch den Luftdruckerzeuger kann ein Unterdruck erzeugt werden, der Luft mit Granulaten aus dem Mischkanal in den Luftkanal der Düseneinheit zieht. Dabei wird beispielsweise durch einen Filter verhindert, dass die Granulate in den Luftkanal gelangen. Die Granulate können stattdessen durch den Granulatkanal zurück in den Behälter transportiert werden. Ein Vorteil hiervon ist, dass auf einfache Weise die Granulate aus dem Behälter und in den Behälter transportiert werden können.

Weiter kann eine Halteeinrichtung für das zumindest eine Aufnahmeelement angeordnet sein. Die Positioniereinrichtung kann das Aufnahmeelement von der Halteeinrichtung aufnehmen und auf der Halteplatte positionieren. Vorteil hiervon ist, dass eine definierte Startposition der Halteelemente vorhanden ist, sodass die Positionierung der Aufnahmeelemente genauer erfolgen kann.

Bei dem erfindungsgemäßen Verfahren zur Herstellung einer Zahnschiene können die Zahnschablonen mittels 3D-Druck hergestellt werden, insbesondere mit einer Aufnahme und/oder einem Verbindungselement zur Verbindung mit den Aufnahmeelementen. Durch den 3D-Druck können die Zahnschablonen auf schnelle und günstige Weise hergestellt werden. Außerdem kann die Aufnahme und/oder das Verbindungselement in den Zahnschablonen, die zur Verbindung mit den Aufnahmeelementen genutzt werden kann, direkt beim Druck-Prozess eingebracht werden. Hierdurch können die Zahnschablonen schneller hergestellt werden. Zur Herstellung der Zahnschablonen kann ein Bild und/oder ein digitaler Abdruck eines Gebisses bestimmt werden und davon ausgehend ein 3D-Modell des Gebisses berechnet werden. Anschließend werden sämtliche Teile des Gebisses, die keine Zähne sind, entfernt, beispielsweise die Kieferknochen. Somit bleiben lediglich die Zähne im 3D-Modell übrig. In die Zähne werden Aufnahmen und/oder Verbindungselemente eingebracht. Anschließend können die Zahnschablonen ausgehend von dem 3D-Modell der Zähne gedruckt werden.

Zum Erhalten eines Plans für eine Positionierung und/oder Anordnung von Aufnahmeelementen kann zunächst ein Bild und/oder ein digitaler Abdruck eines Gebisses bestimmt werden. Dieses Bild zeigt den Soll-Zustand des Gebisses für die nächste Behandlungsphase. Das Bild kann beispielsweise ausgehend von einem Ist-Zustand des Gebisses berechnet werden. Ausgehend von dem Bild wird die Position und/oder die Ausrichtung der Zähne bestimmt. Anschließend wird ein Plan zur Positionierung und/oder Anordnung der Aufnahmeelemente erstellt. Dabei soll die planmäßige Position und/oder Anordnung der Zahnschablonen der Aufnahmeelemente im Wesentlichen zu der aus dem Bild und/oder dem digitalen Abdruck bestimmten Position und/oder Anordnung der Zähne korrespondieren. Mit anderen Worten wird eine Bewegungsabfolge definiert, mit der die Positionierungseinrichtung die Aufnahmeelemente derart positionieren kann, dass die auf den Aufnahmeelementen angeordneten Zahnschablonen analog zu ihrer Position im Gebiss positioniert werden. Auf diese Weise kann sichergestellt werden, dass die Zahnschiene die gewünschte Form hat.

In vorteilhafter Weise erfolgt das Platzieren und Festlegen der Aufnahmeelemente anhand einer Bilderfassungseinrichtung, insbesondere einer Kamera. Durch die Bilderfassungseinrichtung kann überprüft werden, ob die Position der Aufnahmeelemente der geplanten Position entspricht. Hierdurch wird die Genauigkeit der Positionierung verbessert.

Es ist denkbar, dass das Platzieren und Festlegen der Aufnahmeelemente ein Füllen eines Raums zwischen den Aufnahmeelementen mit Granulaten umfasst. Die Aufnahmeelemente können in einem Hohlraum der Einrichtung angeordnet sein. Diese Öffnung kann mit Granulaten befüllt werden, bis die Aufnahmeelemente mit Granulaten umgeben sind. Ein Vorteil hiervon ist, dass die Zahnschiene beim Thermoformen nicht oder mit geringerer Wahrscheinlichkeit an den Aufnahmeelementen kleben bleibt.

In einer vorteilhaften Ausgestaltung kann das Platzieren und Festlegen der Aufnahmeelemente ein Verändern der Position und/oder Ausrichtung von bereits platzierten Aufnahmeelementen umfassen. Nach jeder hergestellten Zahnschiene wird die Position und/oder Ausrichtung einzelner Aufnahmeelemente verändert. Da die Veränderung zwischen zwei Positionen gering ist, die Aufnahmeelemente folglich lediglich um eine geringe Strecke bewegt werden, können die platzierten Aufnahmeelemente direkt von ihrer aktuellen Position in die neue Position verschoben werden. Somit kann auf ein komplett neues Positionieren aller Aufnahmeelemente ausgehend von einer fest definierten Startposition verzichtet werden. Hierdurch wird weniger Zeit für die Positionierung benötigt.

Gemäß einer vorteilhaften Ausgestaltung wird beim Thermoformen des Kunststoffrohlings zunächst der Kunststoffrohling auf dem Tragering platziert. Der Tragering kann sich in einer erhöhten Position befinden, sodass der Kunststoffrohling über den Aufnahmeelementen mit den Zahnschablonen angeordnet werden kann. Anschließend wird der Kunststoffrohling erhitzt und auf die Aufnahmeelemente gedrückt, sodass der Kunststoffrohling mittels der Zahnschablonen als Formteil thermogeformt wird. Durch das Thermoformen passt sich die Form des Kunststoffrohlings den Zahnschablonen an, sodass eine Zahnschiene entsteht. Anschließend können Reste des Kunststoffrohlings entfernt werden, indem der erhitzte und eingedrückte Kunststoffrohling freigeschnitten wird.

Es gibt nun verschiedene Möglichkeiten, die Lehre der vorliegenden Erfindung in vorteilhafter Weise auszugestalten und weiterzubilden. Dazu ist einerseits auf die den Ansprüchen 1, 8 und 16 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: Eine Basisstation gemäß einer Ausführungsform der Erfindung,
- Fig. 2: Die Basisstation mit erhöhtem Tragering,
- Fig. 3a: Die Basisstation im Querschnitt,
- Fig. 3b: Eine Basisstation im Querschnitt gemäß einer weiteren Ausführungsform der Erfindung,
- Fig. 3c: Die Basisstation im Querschnitt mit ausgefahrenem Tragering,
- Fig. 3d: Eine Ausführungsform der Basisstation mit linearem Aktuator,
- Fig. 4a-f: Ein Aufnahmeelement und verschiedene Zahnaufnahmeelemente gemäß einer Ausführungsform der Erfindung,
- Fig. 5: Eine Vorrichtung gemäß einer Ausführungsform der Erfindung,
- Fig. 6a,b: Ein Modell eines Gebisses und ein bearbeitetes Modell eines Gebisses gemäß einer Ausführungsform der Erfindung,
- Fig. 7a,b: Ein Zahnmodell gemäß einer Ausführungsform der Erfindung,

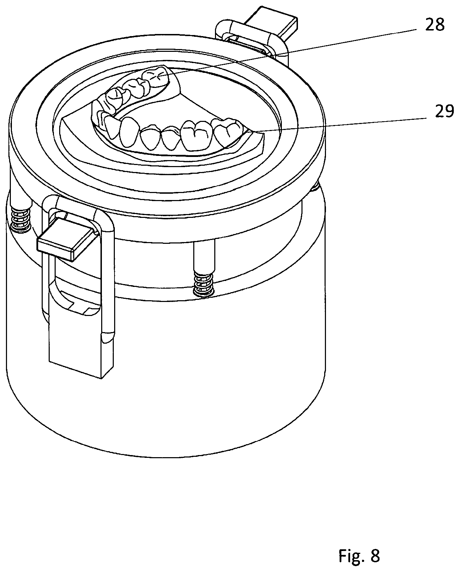

- Fig. 8: Eine Zahnschiene gemäß einer Ausführungsform der Erfindung,
- Fig. 9: Ein Granulatsystem gemäß einer Ausführungsform der vorliegenden Erfindung, und
- Fig. 10: Eine Düseneinheit gemäß einer Ausführungsform der vorliegenden Erfindung.

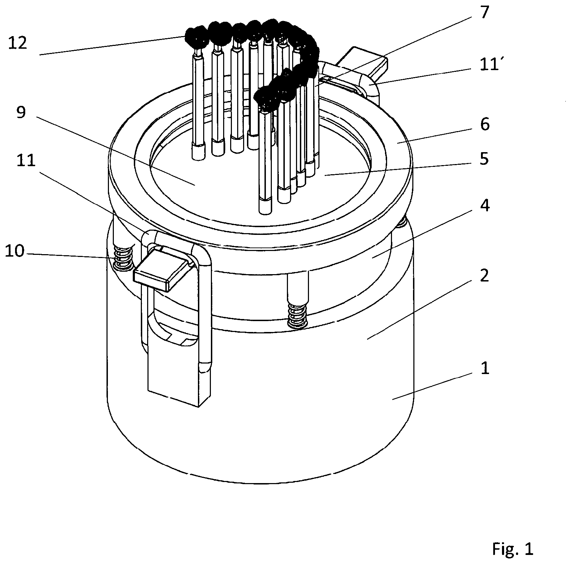

Die Figuren 1 bis 3 zeigen Ansichten einer Einrichtung 1 zum Herstellen eines Formteils einer Zahnschiene, hier in Form einer Basisstation 1. Die Basisstation 1 umfasst einen Grundkörper 2, einen Einsatz 3, einen Abstandsring 4, eine Halteplatte 5, einen Tragering 6 und Aufnahmeelemente 7. Der Einsatz 3 ist in dem Grundkörper 2 angeordnet und umfasst einen Elektromagneten 8. Der Abstandsring 4 ist in den Grundkörper 2 gesteckt. Die Halteplatte 5 ist an dem Abstandring 4 angeordnet. Die Aufnahmeelemente 7 sind auf der Oberseite 9 der Halteplatte 5 lösbar angeordnet.

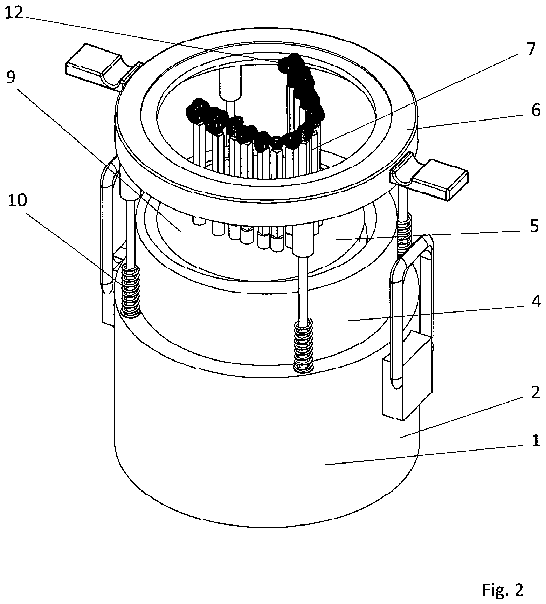

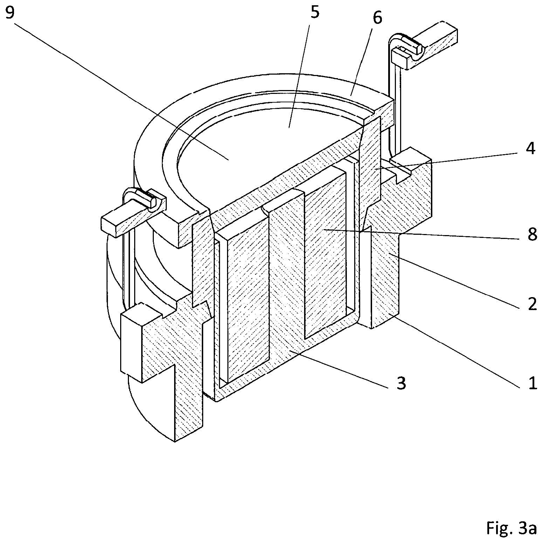

Der Tragering 6 kann in zwei Positionen angeordnet sein. In Figuren 1 und 3a ist der Tragering 6 in einer unteren Position dargestellt, in der der Tragering 6 an der Halteplatte 5 anliegt. Der Tragering 6 wird durch Federn 10 vorgespannt. Zwei seitlich an dem Grundkörper 2 angeordnete Schnallen 11, 11' verhindern, dass der Tragering 6 in die obere Position gedrückt wird. In der unteren Position ist die Halteplatte 5 frei zugänglich, sodass die Aufnahmeelemente 7 auf die Halteplatte 5 gesetzt werden können. In der oberen Position kann ein Kunststoffrohling auf den Tragering 6 gelegt werden. Indem die Schnallen 11, 11' zur Seite geklappt werden, kann der Tragering 6 in die obere Position gebracht werden. Figur 2 zeigt die Basisstation 1, bei der der Tragering 6 in der oberen Position dargestellt ist.

An den Aufnahmeelementen 7 sind Zahnschablonen 12 befestigt. Die Aufnahmeelemente 7 sind magnetisierbar und werden durch den Elektromagneten 8 in Position gehalten. Durch die genaue Positionierung und Ausrichtung der Aufnahmeelemente 7 wird durch die Zahnschablonen 12 ein Gebiss simuliert, das als Formteil für den Thermoformprozess dient. Insbesondere können die Aufnahmeelemente 7 jeweils frei auf der Halteplatte 5 verschoben werden, sodass die Aufnahmeelemente 7 in beliebiger Position relativ zueinander und/oder relativ zu dem Grundkörper 2 angeordnet werden können. Dabei können die Aufnahmeelemente 7 auch entlang einer Achse gedreht werden, um unterschiedliche Ausrichtungen der Aufnahmeelemente 7 zu ermöglichen.

In Figur 1 sind 14 Aufnahmeelemente 7 gezeigt, sodass ein Kiefer eines Erwachsenen ohne Weisheitszähne nachbildbar ist. Es ist ebenfalls möglich, dass eine andere Anzahl an Aufnahmeelementen 7 genutzt wird, je nach dem Aufbau des nachzubildenden Kiefers.

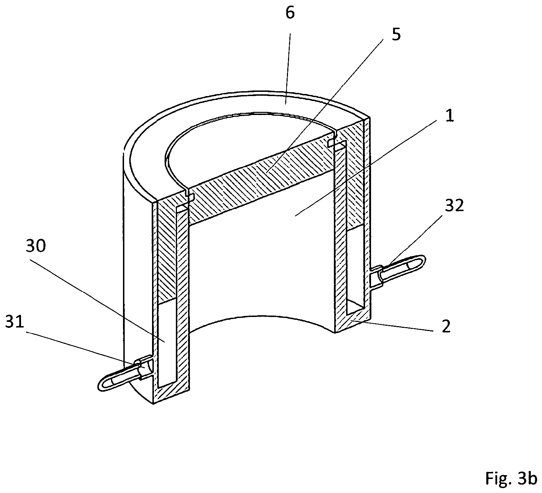

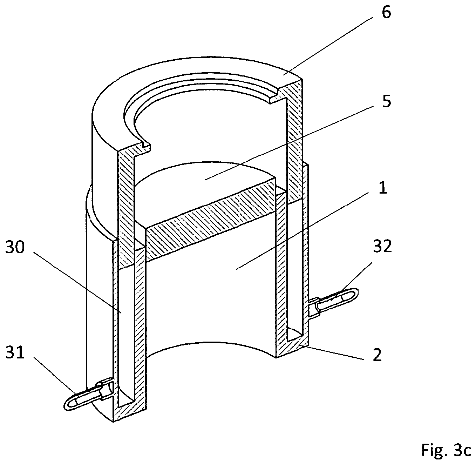

In den Figuren 3b und 3c ist eine weitere Ausführungsform der Basisstation 1 gezeigt. Im Gegensatz zu der Basisstation 1 gemäß den Figuren 1 bis 3a, wird der Tragering 6 nicht durch Federn bewegt, sondern durch eine pneumatische Anordnung. Der Elektromagnet kann unterhalb der Halteplatte 5 angeordnet werden. Der Tragering 6 ist in einer Öffnung 30 des Grundelements 2 eingelassen. Durch Anschlüsse 31 und 32 kann Luft in und/oder aus der Öffnung 30 bewegt werden. Wenn Luft in die Öffnung 30 bewegt wird, erhöht sich der Druck in der Öffnung 30 und der Tragering wird von der unteren Position (Figur 3b) in die obere Position (Figur 3c) gedrückt. Analog sinkt der Druck bei Ablassen der Luft und der Tragering kann zurück in die untere Position bewegt werden. Durch den hohen Druck beim Thermoformen kann der Druck der Pneumatik überwunden werden und so der Tragering 6 beim Thermoformprozess automatisch in Richtung der unteren Position gedrückt werden. Es ist ebenfalls denkbar, dass der Tragering hydraulisch bewegt wird.

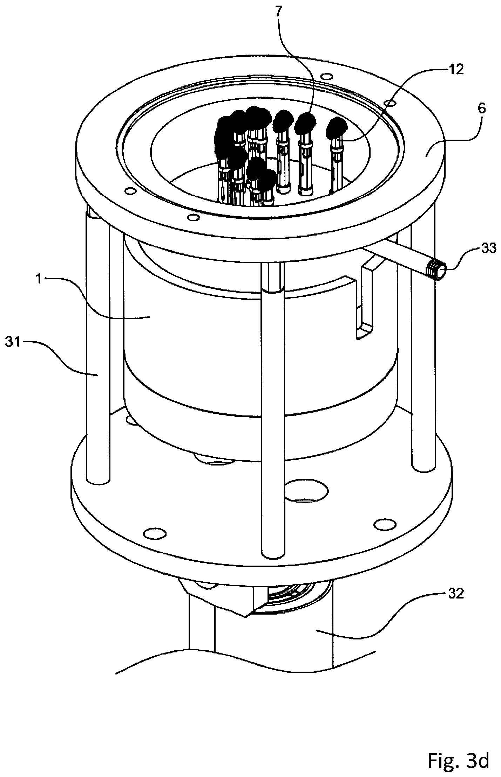

In Figur 3d ist eine weitere Ausführungsform der Basisstation 1 gezeigt. Der Tragering 6 wird von mehreren seitlichen Streben 31 gehalten, die mit einem linearen Aktuator 32 verbunden sind. Durch eine Bewegung des linearen Aktuators 32 kann somit die Höhe des Tragerings 6 eingestellt werden.

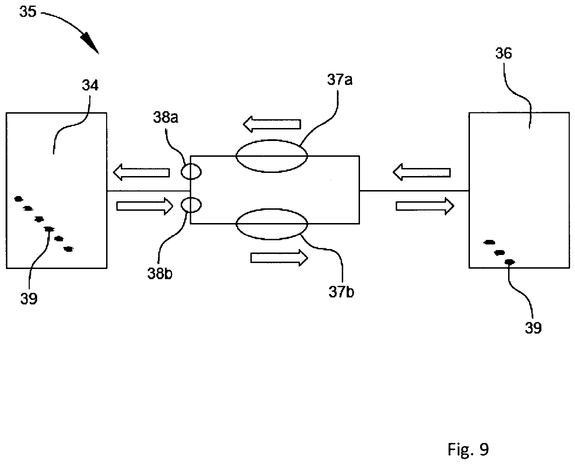

Weiter ist ein Zugang 33 an der Basisstation 1 angeordnet. Durch den Zugang 33 können kleine Granulate, beispielsweise mit 1 mm bis 3 mm Durchmesser, mittels Luftdruck in einen Hohlraum 34 der Basisstation 1 geführt werden und/oder aus dem Hohlraum 34 entfernt werden. Die Granulate können insbesondere nach der Positionierung der Aufnahmeelemente 7 in den Hohlraum 34 gefüllt werden. Vorzugsweise werden die Granulate bis knapp unter die Zahnschablonen 12 gefüllt. Mittels der Granulate kann verhindert werden, dass Zahnschienen während des Thermoformens an den Aufnahmeelementen 7 und/oder dem Tragering 6 festkleben. Darüber hinaus kann während eines Schneidprozesses der Zahnschiene Kunststoffreste oder sonstiger Abfall entstehen. Dieser Abfall kann in die Granulate fallen und beim Entfernen der Granulate aus dem Hohlraum 34 mitabtransportiert werden. Anschließend kann der Abfall entsorgt oder recycelt werden. Der Transport der Granulate ist in Figur 9 gezeigt.

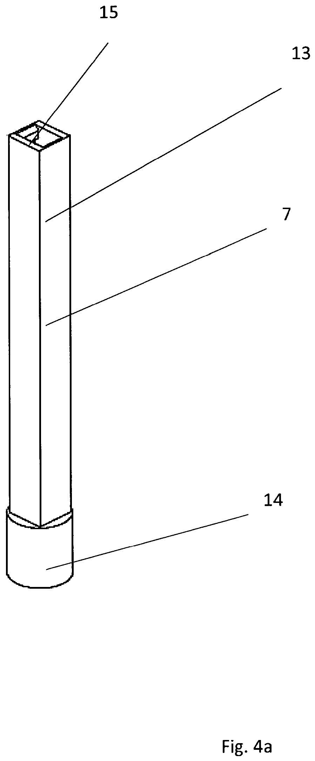

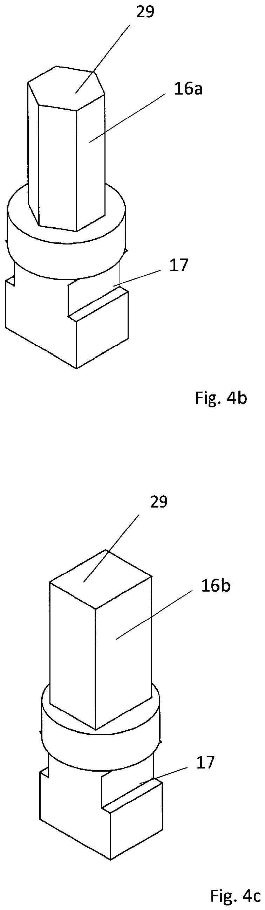

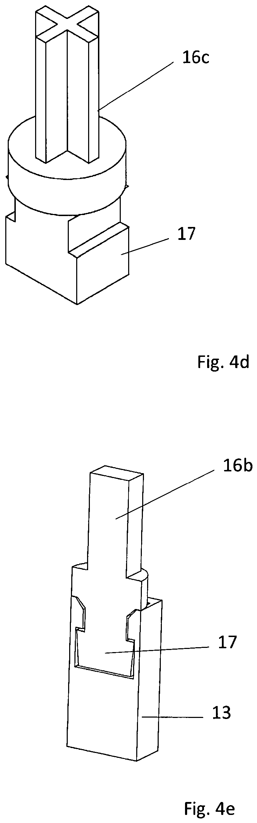

Ein Aufnahmeelement 7 ist in Figur 4a gezeigt. Das Aufnahmeelement 7 umfasst einen Stift 13 mit rechteckigen Querschnitt. An einem Ende weist das Aufnahmeelement 7 ein zylinderförmiges Endstück 14 mit einer kreisförmigen Grundfläche auf. Am anderen Ende weist das Aufnahmeelement 7 eine Öffnung 15 auf, in die ein Zahnaufnahmeelement 16a, 16b, 16c eingesteckt werden kann. Figuren 4b bis 4d zeigen Ausführungen des Zahnaufnahmeelements. Das Zahnaufnahmeelement 16a, 16b, 16c kann ein hexagonales (Fig. 4b), ein rechteckiges (Fig. 4c) oder ein kreuzförmiges (Fig. 4d) Endstück 29 aufweisen, auf das eine Zahnschablone steckbar ist. Die Basis 17 des Zahnaufnahmeelements 16a, 16b, 16c kann in die Öffnung 15 des Stifts 13 gesteckt werden und durch einen Rastmechanismus fixiert werden (Fig. 4e).

Es ist denkbar, dass verschiedene Zahnaufnahmeelemente 16a, 16b, 16c verwendet werden, bei denen das Endstück 29 jeweils eine unterschiedliche Ausrichtung relativ zu der Basis 17 aufweisen, sodass unterschiedliche Ausrichtungen, insbesondere unterschiedliche Winkel, einer Zahnschablone relativ zu dem Aufnahmeelement 7 realisierbar sind.

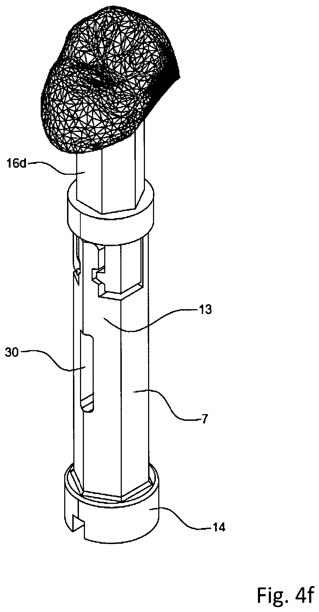

Figur 4f zeigt ein Aufnahmeelement 7 mit einem Zahnaufnahmeelement 16d gemäß einer weiteren Ausführungsform. In dem Aufnahmeelement 7 ist ein Durchbruch 30 ausgebildet, durch den das Aufnahmeelement 7 von einem Roboterarm hochgenommen werden kann.

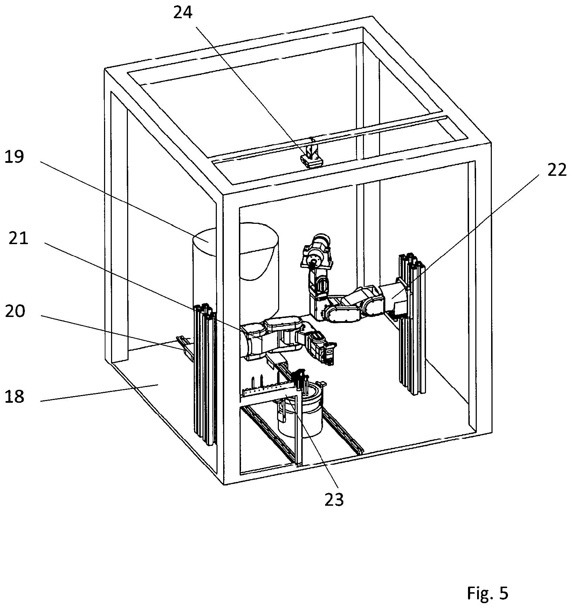

Figur 5 zeigt eine Vorrichtung 18 zum Herstellen einer Zahnschiene. Die Vorrichtung 18 umfasst eine Basisstation 1, eine Thermoformeinrichtung 19, eine Bewegungseinrichtung 20, eine Positioniereinrichtung 21, eine Schneideinrichtung 22, eine Halteeinrichtung 23 und eine Kamera 24.

Die Positioniereinrichtung 21 kann die Aufnahmeelemente 7 von der Halteeinrichtung 23 aufnehmen und auf der Halteplatte 5 der Basisstation 1 positionieren. Die Positioniereinrichtung 21 ist als Roboterarm ausgebildet, um ein exaktes Positionieren der Aufnahmeelemente 7 zu ermöglichen. Zur Positionierung wird die Kamera 24 genutzt, mit der überprüft wird, ob die Aufnahmeelemente 7 in der korrekten Position und Anordnung sind. Es ist denkbar, dass der Roboterarm 21 auf einer Führung, insbesondere einer linearen Führung angeordnet ist. Hierdurch kann der Roboterarm 21 zu einer vorbestimmten Ruheposition gefahren werden. Insbesondere kann der Roboterarm 21 in die Ruheposition gebracht werden, während andere Aktionen durchgeführt werden, bei denen der Roboterarm 21 im Weg sein könnte. Außerdem wird hierdurch die Reichweite des Roboterarms 21 verlängert.

Mithilfe der Bewegungseinrichtung 10 kann die Thermoformeinrichtung 19 über die Basisstation 1 gefahren werden. Nach dem Herstellen der Zahnschiene wird diese durch die Schneideinrichtung 22 von Resten des Kunststoffrohlings befreit. Die Schneideinrichtung 22 ist ebenfalls als ein Roboterarm ausgebildet, der automatisiert um die Zahnschiene schneiden kann. Die Schneideinrichtung 22 kann ebenfalls mittels Daten der Kamera 24 gesteuert werden. Die Kamera 24 ist über der Basisstation 1 angeordnet. Es ist ebenfalls möglich, die Kamera 24 vor der Thermoformeinrichtung 19 anzuordnen. Hierdurch können 3D-Daten der Zähne ermittelt werden während die Thermoformeinrichtung 19 durch die Bewegungseinrichtung 10 bewegt wird.

Es ist ebenfalls denkbar, dass die Schneideinrichtung 22 als eine 5-Achsen-Schneideinrichtung ausgebildet ist. Somit kann auf einen Roboterarm verzichtet werden und die Schneideinrichtung durch eine CNC-Schneideinrichtung ersetzt werden.

Im Folgenden wird das Verfahren zum Herstellen einer Zahnschiene erläutert.

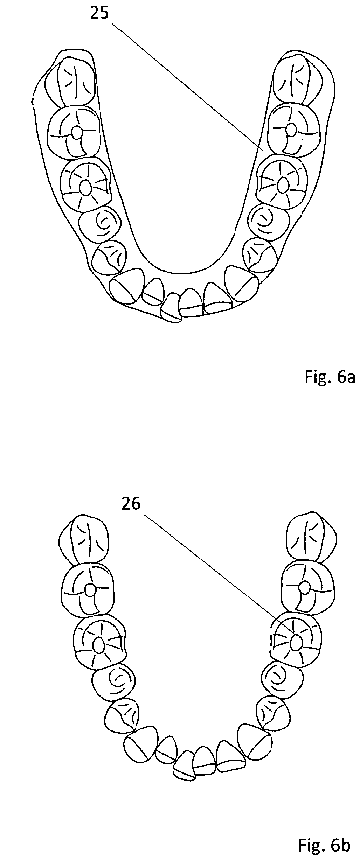

Zunächst wird von einem Patienten ein Abbild eines Gebisses inklusive Kiefer ermittelt, beispielsweise durch einen Beißabdruck, der anschließend digitalisiert wird, oder durch direktes Scannen der Mundhöhle des Patienten. Aus dem Abbild wird ein CAD-Modell 25 des Gebisses berechnet. Ein solches CAD-Modell 25 für einen Unterkiefer ist in Figur 6a gezeigt. Anschließend wird ein Konzept zur Korrektur der Zahnposition und -ausrichtung bestimmt. Hierfür wird ein Zielzustand der Zähne definiert und in mehrere Phasen unterteilt, wobei für jede Phase ein Zwischenzielzustand definiert wird. Eine Phase dauert circa zwei Wochen. Für jeden Zwischenzielzustand wird ein CAD-Modell 25 angefertigt, das den gewünschten Zustand zum Ende dieser Phase zeigt und als Modell für die jeweilige Zahnschiene dient. Anschließend werden Teile des CAD-Modells 25, die keine Zähne zeigen, entfernt, beispielsweise die Kieferknochen, sodass lediglich die Zähne im CAD-Modell 26 zu sehen sind. Ein solches bearbeitetes CAD-Modell 26 ist in Figur 6b gezeigt. Für jedes bearbeitete CAD-Modell 26 wird die Position und Ausrichtung der Zähne bestimmt und abgespeichert. Insbesondere wird neben der Position auch die Drehung, Neigung und/oder Torsion der Zähne bestimmt. Zur einfacheren Zuordnung kann dabei jedem Zahn eine Nummer und eine Position und Ausrichtung zugeordnet werden.

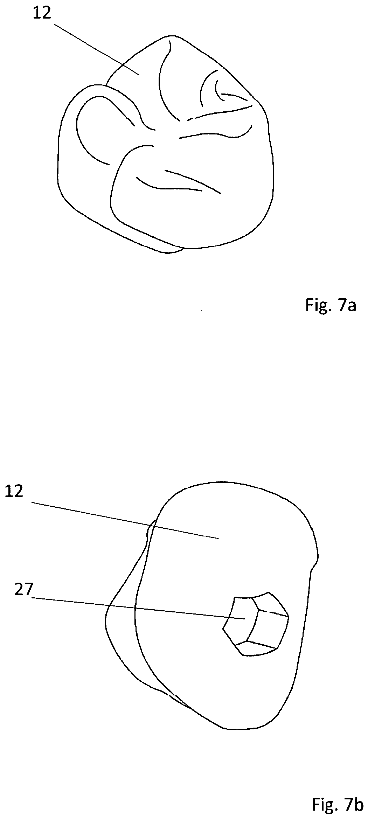

Ausgehend von dem ersten bearbeiteten CAD-Modell 26, das den Ist-Zustand des Gebisses des Patienten zeigt, werden Zahnschablonen 12 aller Zähne in einem 3D-Drucker gedruckt. Im Gegensatz zum Stand der Technik, reicht es aus, diese Zahnschablonen 12 lediglich für das erste CAD-Modell 26 zu drucken und nicht für alle. Dabei werden die Zahnschablonen 12 direkt mit einer Aufnahme 27 versehen, sodass sie auf die Aufnahmeelemente 7 gesteckt werden können, mittels der Zahnaufnahmeelemente 16a, 16b, 16c. Eine Zahnschablone 12 ist in den Figuren 7a und 7b gezeigt. Nach dem Druck der Zahnschablonen 12 können diese poliert, gesäubert und gehärtet werden.

Die Zahnschablonen 12 werden auf die Zahnaufnahmeelemente 16a, 16b, 16c gesteckt und die Zahnaufnahmeelemente 16a, 16b, 16c in den Aufnahmeelementen 7 verrastet. Die Aufnahmeelemente 7 werden anschließend in der Halteeinrichtung 23 angeordnet, die wiederum in der Nähe der Positioniereinrichtung 21 festgelegt wird. Es wird ein Plan zur Positionierung der Aufnahmeelemente 7 ermittelt, ausgehend von der Position und Ausrichtung der Zähne in einem bearbeiteten CAD-Modell 26. Der Tragering 6 wird in der unteren Position festgelegt und der Elektromagnet 8 erzeugt ein Magnetfeld. Das Magnetfeld ist zunächst schwach. Der Roboterarm der Positioniereinrichtung 21 greift die Aufnahmeelemente 7 und platziert sie auf der Halteplatte 5. Durch das schwache Magnetfeld bleiben die Aufnahmeelemente 7 in ihrer Position, können aber durch die Positioniereinrichtung 21 bewegt werden. Die Position und Ausrichtung der Aufnahmeelemente 7 wird dabei nach den Vorgaben eines aktuellen CAD-Modells - also anhand des Plans zur Positionierung - eingestellt. Das heißt, dass die Position und Ausrichtung der Zahnschablonen 12 auf den Aufnahmeelementen 7 der Position und Ausrichtung der Zähne im aktuellen CAD-Modell entsprechen. Sobald alle Aufnahmeelemente 7 in der korrekten Position auf der Halteplatte 5 angeordnet sind, wird die Magnetfeldstärke des Elektromagneten erhöht, sodass die Aufnahmeelemente 7 fest auf der Halteplatte 5 fixiert sind.

Der Tragering 6 wird in der oberen Position angeordnet und ein Kunststoffrohling wird auf dem Tragering 6 angeordnet. Der Kunststoffrohling wird später zu der durchsichtigen Zahnschiene umgeformt und besteht beispielsweise aus Polyvinylchlorid, Polyurethan, Polyethylenterephthalat (PET) oder Polyethylenterephthalatglykol. Der Kunststoffrohling befindet sich somit über den Zahnschablonen 12.

Danach wird die Thermoformeinrichtung 19 mittels der Bewegungseinrichtung 20 über die Basisstation 1 gefahren. Anschließend erhitzt die Thermoformeinrichtung 19 der Kunststoffrohling und drückt ihn gleichzeitig auf die Zahnschablonen 12. Der Kunststoffrohling passt sich hierdurch der Form der Zahnschablonen 12 an, sodass die Zahnschablonen 12 als Formteil für den Thermoformprozess dienen. Hierdurch wird eine Zahnschiene 28 erstellt.

An der Zahnschiene 28 befinden sich noch Reste des Kunststoffrohlings. Deswegen wird der Tragering 6 wieder in die untere Position bewegt, sodass der Zugang zu der Zahnschiene 28 erleichtert wird. Anschließend schneidet die Schneideinrichtung 22 die Reste des Kunststoffrohlings von der Zahnschiene 28 ab. Hierfür wird eine Trajektorie 29 berechnet, die ein Schneidkopf der Schneideinrichtung 22 abfährt. Durch die Kamera 24 kann das korrekte Schneiden der Schneideinrichtung 22 überwacht und gesteuert werden. Danach kann die Zahnschiene poliert, gehärtet, entgratet und entnommen werden.

Anschließend wird eine nächste Zahnschiene hergestellt. Hierfür wird ein nächstes CAD-Modell 26 geladen und die neue Position und Ausrichtung aller Aufnahmeelemente 7 ermittelt. Da die Aufnahmeelemente 7 sich bereits in ähnlichen Position befinden, kann die Positioniereinrichtung die Aufnahmeelemente 7 auf der Halteplatte 5 in die korrekte Position und Ausrichtung schieben beziehungsweise drehen. Dann wird analog zum eingangs beschriebenen Verfahren die nächste Zahnschiene hergestellt.

Dieser Vorgang wird wiederholt bis alle benötigten Zahnschienen gemäß den CAD-Modellen hergestellt sind.

Figur 9 zeigt ein Granulatsystem gemäß einer Ausführungsform der vorliegenden Erfindung.

Das Granulatsystem 35 umfasst einen Haupttank 34 und einen Behälter 36, hier in Form eines Lagers. Bei dem Haupttank 34 kann es sich insbesondere um einen Hohlraum 34 einer Basisstation 1 gemäß Figur 3d handeln. In dem Haupttank 34 und dem Lager 36 sind Granulate 39 angeordnet, die einen Durchmesser von ca. 2 bis 3 mm oder von ca. 1 bis 2 mm aufweisen können. Mittels zweier Granulattransporteinrichtungen 37a, 37b können die Granulate 39 vom Haupttank 34 in das Lager 36 und zurück transportiert werden. Die Granulattransporteinrichtungen 37a, 37b können insbesondere als Drucklufttransporter ausgebildet sein, die die Granulate 39 mittels Pneumatik transportieren. Beispielsweise kann die eine Granulattransporteinrichtung 37a Granulate 39 aus dem Lager 36 in den Haupttank 34 transportieren und die andere Granulattransporteinrichtung 37b Granulate 39 aus dem Haupttank 34 in das Lager 36 transportieren. Mit Hilfe von zwei Ventilen 38a, 38b kann der Zu- und Abfluss aus dem Lager 36 gesteuert werden. Die beiden Granulattransporteinrichtungen 37a, 37b können durch einen gemeinsamen Luftdruckerzeuger (nicht gezeigt), der Luft mit Über- und Unterdruck bereitstellen kann, mit Luft versorgt. Es ist ebenfalls denkbar, dass jede Granulattransporteinrichtung 37a, 37b einen eigenen Luftdruckerzeuger aufweist. Das Lager 36 kann eine Öffnung 40 aufweisen, durch die ein Luftdruckausgleich gewährleistet werden kann.

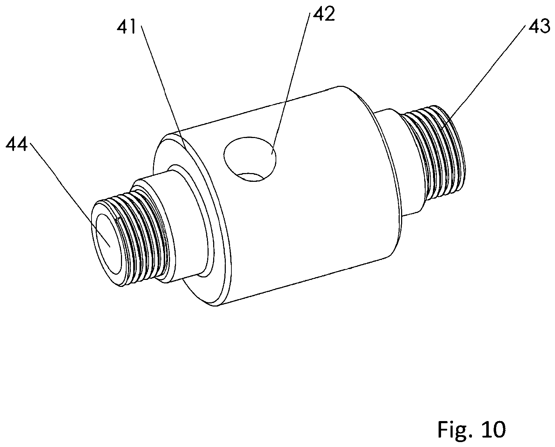

Figur 10 zeigt eine Düseneinheit gemäß einer Ausführungsform der vorliegenden Erfindung.

Die Düseneinheit 41 kann Teil der Granulattransporteinrichtung 37a, 37b gemäß Figur 9 sein. Die Düseneinheit 41 kann einen Luftkanal 42, einen Granulatkanal 43 und einen Mischkanal 44 aufweisen, wobei durch den Mischkanal 44 ein Luft-Granulatgemisch transportierbar ist. Beim Strömen von Luft aus dem Luftkanal 42 in den Mischkanal 44 entsteht ein Unterdruck, der Granulate aus dem Granulatkanal 43 in den Mischkanal 44 transportiert. Hierfür kann der Granulatkanal mit dem Behälter 36 gemäß Figur 9 verbunden sein.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Lehre lediglich zur Erörterung der beanspruchten Lehre dienen, diese jedoch nicht auf die Ausführungsbeispiele einschränken.

### Bezugszeichenliste

- 1: Basisstation
- 2: Grundkörper
- 3: Einsatz
- 4: Abstandsring
- 5: Halteplatte
- 6: Tragering
- 7: Aufnahmeelemente
- 8: Elektromagnet
- 9: Oberseite der Halteplatte
- 10: Federn
- 11: Schnallen
- 12: Zahnschablonen
- 13: Stift
- 14: Zylinderförmiges Endstück
- 15: Öffnung des Stifts
- 16: Zahnaufnahmeelement
- 17: Basis des Zahnaufnahmeelements
- 18: Vorrichtung
- 19: Thermoformeinrichtung
- 20: Bewegungseinrichtung
- 21: Positionierungseinrichtung
- 22: Schneideinrichtung
- 23: Halteeinrichtung
- 24: Kamera
- 25: CAD-Modell
- 26: Bearbeitetes CAD-Modell
- 27: Aufnahme der Zahnschablone
- 28: Zahnschiene
- 29: Endstück
- 30: Durchbruch
- 31: Streben
- 32: Linearer Aktuator
- 33: Zugang
- 34: Hohlraum
- 35: Granulatsystem
- 36: Lager
- 37a,b: Granulattransporteinrichtung
- 38: Ventil
- 39: Granulate
- 40: Öffnung
- 41: Düseneinheit
- 42: Luftkanal
- 43: Granulatkanal
- 44: Mischkanal

## Patentansprüche

1. Einrichtung (1) zum Herstellen eines Formteils zum Thermoformen einer Zahnschiene (28) umfassend ein Grundelement (2), eine Halteplatte (5) und zumindest ein Aufnahmeelement (7), wobei das zumindest eine Aufnahmeelement (7) an einer Oberseite (9) der Halteplatte (5) lösbar angeordnet ist, wobei das zumindest eine Aufnahmeelement (7) dazu ausgebildet ist, eine Zahnschablone (12) aufzunehmen, und wobei das zumindest eine Aufnahmeelement (7) in mehreren Positionen und/oder Ausrichtungen an der Halteplatte (5) festlegbar ist
**dadurch gekennzeichnet, dass** an einer Unterseite der Halteplatte (5) ein Magnet (8), insbesondere ein Elektromagnet, angeordnet ist und dass das zumindest eine Aufnahmeelement (7) zumindest teilweise aus einem magnetisierbaren Material besteht.

2. Einrichtung (1) nach Anspruch 1, **dadurch gekennzeichnet, dass** an dem Grundelement (2) ein Tragering (6) angeordnet ist.

3. Einrichtung (1) nach Anspruch 2, **dadurch gekennzeichnet, dass** der Tragering (6) in einer ersten Position, in der der Tragering (6) an der Halteplatte (5) angeordnet ist und in einer zweiten Position, in der der Tragering (6) von der Halteplatte (5) beabstandet ist, anordenbar ist.

4. Einrichtung (1) nach einem der Ansprüche 1 bis 3, **dadurch gekennzeichnet, dass** das zumindest eine Aufnahmeelement (7) eine kreisförmige Grundfläche und/oder eine eckige, insbesondere rechteckige, Querschnittsfläche aufweist.
und/oder dass an dem zumindest einen Aufnahmeelement (7) ein Zahnaufnahmeelement (16a, 16b, 16c) form- und/oder kraftschlüssig angeordnet ist, wobei das Zahnaufnahmeelement (16a, 16b, 16c) vorzugsweise einen rechteckigen, hexagonalen und/oder kreuzförmigen Querschnitt aufweist,
und/oder dass zumindest 6, vorzugsweise zumindest 8, bevorzugt zumindest 10, insbesondere zumindest 12 Aufnahmeelemente (7) angeordnet sind.

5. Vorrichtung zum Herstellen einer Zahnschiene (28) umfassend eine Einrichtung (1) gemäß einem der Ansprüche 1 bis 4, eine Positioniereinrichtung (21) zum Positionieren des zumindest einen Aufnahmeelements (7) und eine Thermoformeinrichtung (19) zum Thermoformen eines Kunststoffrohlings.

6. Vorrichtung nach Anspruch 5, **dadurch gekennzeichnet, dass** eine Schneideinrichtung (22) zum Schneiden der Zahnschiene (28) angeordnet ist, und/oder dass eine Bewegungseinrichtung (20) angeordnet ist, ausgebildet zum Bewegen der Thermoformeinrichtung (19) zu der Einrichtung (1),
und/oder dass eine Bilderfassungseinrichtung (24) angeordnet ist, ausgebildet zum Erfassen der Position und/oder der Ausrichtung des zumindest einen Aufnahmeelements (7) und/oder der Zahnschiene (28),
und/oder dass ein Granulatsystem (35) umfassend einen Behälter (36) mit Granulaten (39) und zumindest einer Granulattransporteinrichtung (37a, 37b) angeordnet ist, wobei die zumindest eine Granulattransporteinrichtung (37a, 37b) dazu ausgebildet ist, Granulate (39) aus dem Behälter (36) in die Einrichtung (1) und/oder aus der Einrichtung (1) in den Behälter (36) zu transportieren.

7. Vorrichtung nach Anspruch 6, **dadurch gekennzeichnet, dass** die zumindest eine Granulattransporteinrichtung (37a, 37b) einen Luftdruckerzeuger und eine Düseneinheit (41) aufweist.

8. Vorrichtung nach Anspruch 7, **dadurch gekennzeichnet, dass** die Düseneinheit (41) einen Luftkanal (42), einen Granulatkanal (43) und einen Mischkanal (44) für Luft und Granulat (39) aufweist.

9. Vorrichtung nach einem der Ansprüche 6 bis 8, **dadurch gekennzeichnet, dass** eine Halteeinrichtung (23) für das zumindest eine Aufnahmeelement (7) angeordnet ist.

10. Verfahren zum Herstellen einer Zahnschiene (28), mittels einer Vorrichtung nach einem der Ansprüche 5 bis 9, umfassend die Schritte:
- Erhalten eines Plans für eine Positionierung und/oder Anordnung von Aufnahmeelementen (7), wobei an den Aufnahmeelementen (7) jeweils eine Zahnschablone (12) angeordnet ist,
- Platzieren und Festlegen der Aufnahmeelemente (7) auf einer Oberseite (9) einer Halteplatte (5) anhand des erhaltenen Plans, wobei ein Roboterarm einer Positioniereinrichtung (21) die Aufnahmeelemente (7) greift und auf der Halteplatte (5) platziert,
- Herstellen der Zahnschiene (28) durch Thermoformen eines Kunststoffrohlings, wobei die platzierten Aufnahmeelemente (7) als Formteil für das Thermoformen genutzt werden.

11. Verfahren nach Anspruch 10, **dadurch gekennzeichnet, dass** die Zahnschablonen (12) mittels 3D-Druck hergestellt werden, insbesondere mit einer Aufnahme (27) und/oder einem Verbindungselement zur Verbindung mit den Aufnahmeelementen (7).

12. Verfahren nach Anspruch 10 oder 11, **dadurch gekennzeichnet, dass** das Erhalten eines Plans für eine Positionierung und/oder Anordnung von Aufnahmeelementen (7) folgende Schritte umfasst:
- Erhalten eines Bilds und/oder digitalen Abdrucks eines Gebisses,
- Bestimmen der Position und/oder der Ausrichtung der Zähne aus dem erhaltenen Bild und/oder dem digitalen Abdruck,
- Erstellen eines Plans zur Positionierung und/oder Anordnung der Aufnahmeelemente (7), wobei die planmäßige Position und/oder Anordnung der Zahnschablonen (12) der Aufnahmeelemente (7) im Wesentlichen zu der aus dem Bild und/oder dem digitalen Abdruck bestimmten Position und/oder Anordnung der Zähne korrespondiert.

13. Verfahren nach einem der Ansprüche 10 bis 12, **dadurch gekennzeichnet, dass** das Platzieren und Festlegen der Aufnahmeelemente (7) die folgenden Schritte umfasst:
- Einstellen einer magnetischen Anziehungskraft eines Magneten (8), insbesondere eines Elektromagneten, wobei der Magnet (8) auf einer Unterseite der Halteplatte (5) angeordnet ist,
- Platzieren der Aufnahmeelemente (7) auf der Oberseite (9) der Halteplatte (5) mit einer bestimmten Position und/oder Ausrichtung, wobei die Position und Ausrichtung anhand des erhaltenen Plans erfolgt,
- Erhöhen der magnetischen Anziehungskraft des Magneten (8).

14. Verfahren gemäß einem der Ansprüche 10 bis 13, **dadurch gekennzeichnet, dass** das Platzieren und Festlegen der Aufnahmeelemente (7) anhand einer Bilderfassungseinrichtung, insbesondere einer Kamera, erfolgt,
und/oder dass das Platzieren und Festlegen der Aufnahmeelemente (7) ein Verändern der Position und/oder Ausrichtung von bereits platzierten Aufnahmeelementen (7) umfasst,
und/oder dass das Platzieren und Festlegen der Aufnahmeelemente (7) ein Füllen eines Raums zwischen den Aufnahmeelementen (7) mit Granulaten umfasst.

15. Verfahren gemäß einem der Ansprüche 10 bis 14, **dadurch gekennzeichnet, dass** das Thermoformen eines Kunststoffrohlings die folgenden Schritte umfasst:
- Platzieren des Kunststoffrohlings auf einem Tragering (6),
- Erhitzen des Kunststoffrohlings,
- Drücken des Kunststoffrohlings auf die platzierten Aufnahmeelemente (7),
- Freischneiden des erhitzten und eingedrückten Kunststoffrohlings.

## Claims

1. A device (1) for producing a molded component of a dental splint (28) comprises a base element (2), a holding plate (5), and at least one detachable receiving element (7). This receiving element (7) is fixable/securable to the holding plate (5) in multiple positions and/or orientations and is specifically designed to accommodate a dental template (12). Additionally, the configuration of the receiving element (7) on the holding plate (5) is adjustable.
It is distinguished by the presence of a magnet (8), specifically an electromagnet, positioned on the underside of the holding plate (5). Furthermore, the at least one receiving element (7) is composed, at least in part, of a magnetizable material.

2. The device (1) as described in claim 1 is **characterized by** the inclusion of a support ring (6) positioned on the base element (2).

3. The device (1) as outlined in claim 2 is **characterized by** the capability of the support ring (6) to be positioned in a first configuration, where it is situated on the holding plate (5), and in a second configuration, where it is positioned at a distance from the holding plate (5).

4. The device (1) according to any of claims 1 to 3, **characterized in that** the at least one receiving element (7) has a circular base surface and/or an angular, in particular rectangular, cross-sectional surface. and/or that a tooth receiving element (16 a, 16 b, 16 c) is arranged on the at least one receiving element (7) in a form-fitting and/or force-fitting manner, wherein the tooth receiving element (16 a, 16 b, 16 c) preferably has a rectangular, hexagonal and/or cruciform cross section, and/or that at least 6, preferably at least 8, preferably at least 10, in particular at least 12 receiving elements (7) are arranged.

5. An apparatus for the production of a dental splint (28) includes a device (1) as specified in any of claims 1 to 4, a positioning mechanism (21) for accurately placing the at least one receiving element (7), and a thermoforming unit (19) designed for shaping a plastic blank through the application of heat.

6. The device as claimed in claim 5 is **characterized by** the inclusion of a cutting apparatus (22) for sectioning the dental splint (28). Additionally, a movement mechanism (20) is provided, which is configured to facilitate the relocation of the thermoforming device (19) to the device (1). An image acquisition system (24) is also incorporated, designed to detect the position and/or orientation of the at least one receiving element (7) and/or the dental splint (28). Furthermore, a granule system (35) is included, consisting of a container (36) filled with granules (39) and at least one granule transport device (37 a, 37 b). This transport device (37 a, 37 b) is specifically designed to convey granules (39) from the container (36) into the device (1) and/or from the device (1) back into the container (36).

7. The device as claimed in claim 6 is **characterized by** the at least one granule conveying device (37 a, 37 b) being equipped with an air pressure generator and a nozzle assembly (41).

8. The device as claimed in claim 7, **characterized in that** the nozzle unit (41) has an air duct (42), a granulate duct (43) and a mixing duct (44) for air and granulate (39).

9. A device as described in any of claims 6 to 8 is **characterized by** the presence of a holding mechanism (23) designated for the at least one receiving element (7).

10. A method for producing a dental splint (28), in particular by means of a device according to any of claims 5 to 9, comprising the following steps:
- Obtaining a plan for a positioning and/or arrangement of receiving elements (7), wherein a dental template (12) is arranged on each of the receiving elements (7),
- Placing and fixing the receiving elements (7) on an upper side (9) of a holding plate (5) on the basis of the obtained plan, wherein a robot arm of a positioning device (21) grips the receiving elements (7) and places them on the holding plate (5),
- Production of the dental splint (28) by thermoforming a plastic blank, wherein the placed receiving elements (7) are used as a molded part for thermoforming.

11. The method as claimed in claim 10 is **characterized by** the production of dental templates (12) through 3D printing, specifically incorporating a receptacle (27) and/or a connecting element for attachment to the receiving elements (7).

12. The method as claimed in claim 10 or 11, wherein obtaining a plan for a positioning and/or arrangement of receiving elements (7) comprises the following steps:
- Obtaining an image and / or digital impression of a dentition,
- Determining the position and / or the alignment of the teeth from the image obtained and / or the digital impression,
- Creating a plan for the positioning and/or arrangement of the receiving elements (7), wherein the planned position and/or arrangement of the dental templates (12) of the receiving elements (7) essentially corresponds to the position and/or arrangement of the teeth determined from the image and/or the digital impression.

13. A method according to any one of claims 10 to 12, **characterized in that** the placement and fixing of the receiving elements (7) comprises the following steps:
- Adjusting a magnetic attraction force of a magnet (8), in particular an electromagnet, wherein the magnet (8) is arranged on a bottom side of the holding plate (5,
- Placing the receiving elements (7) on the upper side (9) of the holding plate (5) with a specific position and/or orientation, the position and orientation being carried out on the basis of the plan obtained,
- Increasing the magnetic attraction of the magnet (8).

14. A method as described in any of claims 10 to 13 is **characterized by** the placement and securing of the receiving elements (7) being conducted based on data from an image acquisition device, such as a camera. Additionally, the process may involve adjusting the position and/or orientation of already positioned receiving elements (7). Furthermore, the placement and securing of the receiving elements (7) may include the filling of the space between the receiving elements (7) with granules.

15. A method as claimed in any of claims 10 to 14, wherein the thermoforming of a plastic blank comprises the following steps:
- Placing the plastic blank on a support ring (6),
- Heating the plastic blank,
- Pressing the plastic blank onto the placed receiving elements (7),
- Cutting open the heated and pressed-in plastic blank.

## Revendications

1. Le dispositif (1) pour la fabrication d'un composant moulé d'une attelle dentaire (28) comprenant un élément de base (2), une plaque de maintien (5) et au moins un élément de réception (7), dans lequel au moins un élément de réception (7) est amovible sur une face supérieure (9) de la plaque de maintien (5), dans lequel au moins un élément de réception (7) est destiné à recevoir un gabarit dentaire (12). En outre, la configuration de l'élément de réception (7) sur la plaque de maintien (5) peut être fixé.
Il se distingue par le fait qu'un aimant (8), en particulier un électro-aimant, est disposé sur une face inférieure de la plaque de maintien (5) et qu'au moins un élément de réception (7) est constitué au moins partiellement d'un matériau magnétisable.

2. Le dispositif (1) tel que décrit dans la revendication 1 est **caractérisé par** l'inclusion d'un anneau de support (6) positionné sur l'élément de base (2).

3. Le dispositif (1) décrit dans la revendication 2 est **caractérisé par** la capacité de l'anneau de support (6) à être positionné dans une première configuration, où il est situé sur la plaque de maintien (5), et dans une seconde configuration, où il est positionné à une certaine distance de la plaque de maintien (5).

4. Le dispositif (1) selon l'une quelconque des revendications 1 à 3, **caractérisé en ce qu'**au moins un élément de réception (7) présente une surface de base circulaire et/ou une surface de section angulaire, notamment rectangulaire. et/ou qu'un élément de réception de dent (16 a, 16 b, 16 c) est disposé sur l'au moins un élément de réception (7) de manière à obtenir un ajustement de forme et/ou de force, l'élément de réception de dent (16 a, 16 b, 16 c) ayant une section rectangulaire, hexagonale et/ou cruciforme, et/ou de préférence au moins 6, de préférence au moins 8, de préférence au moins 10, et au moins 12, en particulier au moins 12, éléments de réception (7) sont disposés.

5. Un appareil pour la production d'une attelle dentaire (28) comprend un dispositif (1) tel que spécifié dans l'une des revendications 1 à 4, un mécanisme de positionnement (21) pour placer avec précision l'au moins un élément de réception (7), et une unité de thermoformage (19) conçue pour façonner une ébauche en plastique par l'application de la chaleur.

6. Le dispositif selon la revendication 5 est **caractérisé par** l'inclusion d'un appareil de coupe (22) pour sectionner l'attelle dentaire (28). En outre, un mécanisme de mouvement (20) est prévu, configuré pour faciliter le déplacement du dispositif de thermoformage (19) vers le dispositif (1). Un système d'acquisition d'images (24) est également incorporé, conçu pour détecter la position et/ou l'orientation d'au moins un élément de réception (7) et/ou de l'attelle dentaire (28).
En outre, un système de granulats (35) est inclus, consistant en un conteneur (36) rempli de granulés (39) et au moins un dispositif de transport de granulés (37 a, 37 b). Ce dispositif de transport (37 a, 37 b) est spécialement conçu pour transporter les granulés (39) du conteneur (36) dans le dispositif (1) et/ou du dispositif (1) vers le conteneur (36).

7. Le dispositif selon la revendication 6 est **caractérisé par le fait qu'**au moins un dispositif de transport de granulés (37 a, 37 b) est équipé d'un générateur de pression d'air et d'un ensemble de buses (41).

8. Dispositif selon la revendication 7, **caractérisé en ce que** l'unité de buse (41) comporte un conduit d'air (42), un conduit de granulés (43) et un conduit de mélange (44) pour l'air et les granulés (39).

9. Un dispositif tel que décrit dans l'une des revendications 6 à 8 est **caractérisé par** la présence d'un mécanisme de maintien (23) destiné à l'au moins un élément de réception (7).

10. Procédé de fabrication d'une attelle dentaire (28), notamment au moyen d'un dispositif selon l'une des revendications 5 à 9, comprenant les étapes suivantes :
- Obtention d'un plan de positionnement et/ou de disposition des éléments de réception (7), dans lequel un gabarit dentaire (12) est disposé sur chacun des éléments de réception (7),
- Placement et fixation des éléments de réception (7) sur une face supérieure (9) d'une plaque de maintien (5) sur la base du plan obtenu, un bras robotisé d'un dispositif de positionnement (21) saisissant les éléments de réception (7) et les plaçant sur la plaque de maintien (5),
- Production de l'attelle dentaire (28) par thermoformage d'une ébauche en plastique, dans laquelle les éléments de réception (7) placés sont utilisés comme pièce moulée pour le thermoformage.

11. Le procédé selon la revendication 10 est **caractérisé par** la production de gabarits dentaires (12) par impression 3D, incorporant spécifiquement un réceptacle (27) et/ou un élément de connexion pour la fixation aux éléments de réception (7).

12. Procédé selon la revendication 10 ou 11, dans lequel l'obtention d'un plan pour un positionnement et/ou un agencement d'éléments de réception (7) comprend les étapes suivantes :
- Obtention d'une image et/ou d'une empreinte numérique d'une dentition,
- Détermination de la position et/ou de l'alignement des dents à partir de l'image obtenue et/ou de l'empreinte numérique,
- Création d'un plan pour le positionnement et/ou la disposition des éléments de réception (7), dans lequel la position et/ou la disposition planifiée des gabarits dentaires (12) des éléments de réception (7) correspond essentiellement à la position et/ou à la disposition des dents déterminées à partir de l'image et/ou de l'empreinte numérique.

13. Procédé selon l'une quelconque des revendications 10 à 12, **caractérisé par le fait que** la mise en place et la fixation des éléments de réception (7) comprend les étapes suivantes :
- Réglage d'une force d'attraction magnétique d'un aimant (8), en particulier d'un électro-aimant, l'aimant (8) étant disposé sur une face inférieure de la plaque de maintien (5),
- Placement des éléments de réception (7) sur la face supérieure (9) de la plaque de maintien (5) avec une position et/ou une orientation spécifique, la position et l'orientation étant effectuées sur la base du plan obtenu,
- Augmentation de l'attraction magnétique de l'aimant (8).

14. Le procédé tel que décrit dans l'une des revendications 10 à 13 est **caractérisé par le fait que** la mise en place et la fixation des éléments de réception (7) sont effectuées sur la base de données provenant d'un dispositif d'acquisition d'images, tel qu'une caméra. En outre, le processus peut impliquer l'ajustement de la position et/ou de l'orientation d'éléments de réception (7) déjà positionnés. En outre, la mise en place et la fixation des éléments de réception (7) peuvent comprendre le remplissage de l'espace entre les éléments de réception (7) avec des granulés.

15. Procédé selon l'une quelconque des revendications 10 à 14, dans lequel le thermoformage d'une ébauche en matière plastique comprend les étapes suivantes :
- Placement de l'ébauche en plastique sur un anneau de support (6),
- Chauffage de l'ébauche en plastique,
- Pressage de l'ébauche en plastique sur les éléments de réception placés (7),
- Découpage de l'ébauche en plastique chauffée et pressée.
